(19)

Europäisches
Patentamt
European
Patent Office
Office européen
des brevets

(11) **EP 2 136 236 A1**

(12) **EUROPEAN PATENT APPLICATION**
published in accordance with Art. 153(4) EPC

(43) Date of publication:
**23.12.2009 Bulletin 2009/52**

(51) Int Cl.:
***G02B 26/02*** *(2006.01)*

(21) Application number: **08777784.3**

(86) International application number:
**PCT/JP2008/061984**

(22) Date of filing: **02.07.2008**

(87) International publication number:
**WO 2009/008304 (15.01.2009 Gazette 2009/03)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.07.2007 JP 2007180876**

(71) Applicant: **Central Glass Company, Limited Yamaguchi 755-0001 (JP)**

(72) Inventors:
• **OKAMOTO, Hideyuki**
  **Chioyoda-ku, Tokyo 101-0054 (JP)**
• **KUBOTA, Yoshinori**
  **Chioyoda-ku, Tokyo 101-0054 (JP)**

(74) Representative: **Manitz, Finsterwald & Partner GbR**
**Martin-Greif-Strasse 1**
**80336 München (DE)**

(54) **OPTICAL LOSS DEVICE**

(57)    An optical loss device including an optical fiber is disclosed which is **characterized in that** the optical loss device includes a loop portion formed by winding the optical fiber in a loop shape at least one turn, and two rotation centers that are located in a plane defined by the loop portion and that face each other, the two rotation centers forming a rotation axis located in the plane, and which is **characterized in that** a light of wavelength band is attenuated by twisting the loop portion around the rotation axis to vary a shape of the loop portion.

# FIG.2

(a)
LOOP SHAPE OF
OPTICAL FIBER
BEFORE TWISTING

(b)
LOOP SHAPE OF
OPTICAL FIBER
WHEN TWISTING

EP 2 136 236 A1

Description

TECHNICAL FIELD

The present invention relates to an optical attenuator or an optical switch which is used for optical measurement, optical communication or the like.

BACKGROUND OF THE INVENTION

A laser light source, an ASE light source or the like may be equipped with an optical attenuator for adjusting light output, or may be equipped with an optical switch for the sake of safety. Many of light sources which output lights by optical fibers focus or collect a light generated in a light generating section on an optical fiber, and guide the light to an output optical fiber by using a guiding optical fiber. Generally, the optical attenuator or the optical switch is provided in an intermediate portion of this guiding optical fiber.

As a structure of the optical attenuator, there are a method in which an attenuator plate or a knife-edge is inserted into a region of collimated beam to adjust a light transmission rate; and a method in which a coupling efficiency to a collimating light-receiving system is varied by applying an external magnetic field to a garnet crystal having a Faraday effect, while varying a direction of a propagating collimated light by means of prism or mirror (Patent Documents 1 and 2). As a structure of the optical switch, a light path is switched by deviating an optical axis of one of optical fibers facing each other, so as to cause the one to face a different optical fiber. Alternatively, an optical port to be coupled is switched by changing a position and/or angle of mirror. (Patent Documents 3 and 4)

However, in a case that an optical attenuator or optical switch (hereinafter, referred to as an optical loss device) is inserted between optical fibers; an attenuator plate, a blocking plate and/or a lens for collimating a diffused light outputted from the optical fiber need to be inserted. In this case, when a reflected light generated at an end surface of the optical fiber, at a surface of the lens or at a surface of the attenuator plate enters a light source section, an output power tends to become unstable and/or a ripple tends to appear on a wavelength spectrum of an output light due to multiple reflection. Thereby, a quality of light source might be greatly degraded. At worst, the reflected light enters into an excited laser medium so that a giant pulse is generated. There is a possibility that this giant pulse damages a resonator mirror constituting the laser and/or damages an output end surface of the optical fiber. Therefore, it is necessary that the reflection is reduced illimitably. As a means of suppressing the reflection, it is considerable that an end surface of the optical fiber is arranged obliquely, or that an AR coat is applied to a reflecting surface. However, this induces a high-cost structure, and moreover, it is difficult to fully suppress the reflection.

Since an insertion loss is relatively great in a free-space optical system, an accurate alignment is needed. However, an achievement of the needed accuracy has its limitation. Specifically, a single-mode optical fiber for an ultraviolet or visible region below 700nm in wavelength might have a core diameter below 2.5$\mu$m. In such a case, the alignment is extremely difficult.

In order to construct an ideal optical loss device without the reflection, it is necessary to provide an optical loss device capable of producing a loss inside the optical fiber without bringing light to a space. That is, an all fiber type optical loss device is needed. As the all fiber type optical loss device, a method is known in which the loss is obtained by winding the optical fiber around a circular cylinder (Patent Documents 5 and 6), and a method is known in which an attenuation is obtained by applying a one-dimensionally expanding and contracting operation to the optical fiber wound in a circular loop so that the optical fiber is deformed in an oval loop (Patent Document 7).

Patent Document 1: Japanese Patent No. 2933919
Patent Document 2: Japanese Patent Application Publication No. 2000-314861
Patent Document 3: Japanese Patent Application Publication No. 9-159940
Patent Document 4: Japanese Patent Application Publication No. 2006-078837
Patent Document 5: Japanese Utility Model Application Publication No. 62-060902
Patent Document 6: Japanese Patent Application Publication No. 7-159705
Patent Document 7: Japanese Patent Application Publication No. 2005-77973

SUMMARY OF THE INVENTION

In the all fiber type optical loss device, in a case that the loss is obtained by winding the optical fiber around the circular cylinder as mentioned above; it is necessary to set a small diameter of the circular cylinder which is provided for rolling up the optical fiber, and/or to increase a winding number, in order to obtain great optical loss. In the case that the winding number is increased, there is a risk that the optical fiber is entangled.

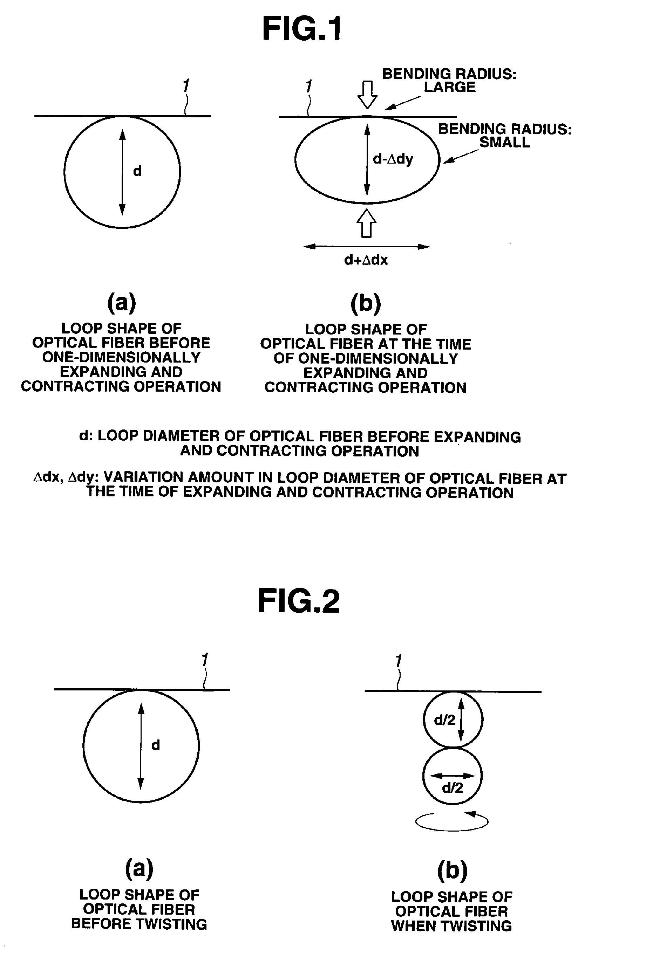

FIG. 1 is a schematic view in the case that the attenuation is obtained by applying the one-dimensionally expanding and contracting operation to the optical fiber 1 wound in a circular loop so that the optical fiber is deformed in an oval loop as mentioned above. FIG. 1 schematically shows loop shapes of the optical fiber before the one-dimensionally expanding and contracting operation (a), and at the time of the one-dimensionally expanding and contracting operation (b). At the time of one-dimensionally expanding and contracting operation (b), the oval loop portion includes a portion having a small bending radius and also includes a portion having a large bending radius, as compared with the shape before the expanding and contracting operation (a). That is, in the portion having the large bending radius, a bending loss is reduced and hence is not efficient.

It is an object of the present invention to provide an optical loss device, devised to have a low insertion loss without the reflection and to be efficient while preventing the entanglement of optical fiber.

As shown in FIG. 1, in the method where the bending is produced by the one-dimensionally expanding and contracting operation, a portion whose bending radius is made smaller and a portion whose bending radius is made larger are caused. That is, the bending loss is reduced in the portion whose bending radius is made larger. Hence, the bending loss is not efficient in the portion whose bending radius has been made larger. In view of such a problem, FIG. 2 shows a schematic view of a means according to the present invention. FIG. 2 schematically shows loop shapes before (a) and after (b) a loop portion of the optical fiber 1 is twisted. Inventers of the present application have found that the bending radius in all areas of the loop portion of optical fiber after (b) the loop portion has been twisted is smaller than that before (a) the loop portion is twisted. According to this find, the present invention has been created.

That is, according to the present invention, there is provided an optical loss device including an optical fiber, **characterized in that** the optical loss device comprises: a loop portion formed by winding the optical fiber in a loop shape at least one turn; and two rotation centers which are located in a plane defined by the loop portion and which face each other, the two rotation centers forming a rotation axis located in the plane, and that a light of wavelength band is attenuated by twisting the loop portion around the rotation axis to vary a shape of the loop portion.

Further, there is provided the optical loss device including an optical fiber, **characterized in that** the two rotation centers of the loop portion are respectively used as holding portions; and the loop portion is twisted by rotating the two holding portions around the rotation axis.

Further, there is provided the optical loss device including an optical fiber, **characterized in that** the optical loss device further comprises two rods through a loop of the loop portion; and the loop portion is twisted by rotating one of the two rods around the rotation axis.

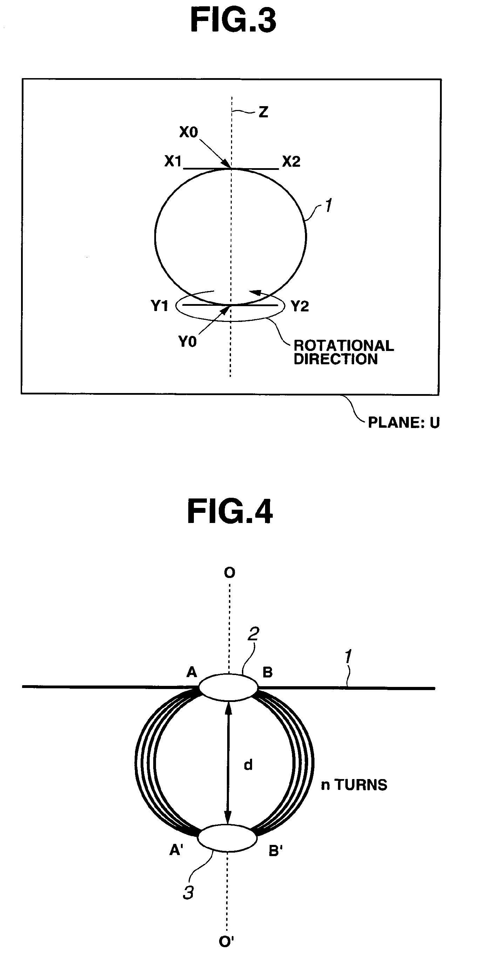

Now, a concept of twist (twisting) according to the present invention is explained. FIG. 3 is a schematic view showing the concept of twist. In FIG. 3, a reference sign 1 denotes a loop portion formed by optical fiber, and a plane U denotes a plane including (given by) the loop portion. Moreover, reference signs X0 and Y0 denote points of the loop portion which faces each other relative to the loop portion, and a reference sign Z denotes a rotation axis which is included in the plane U and which functions (is formed) by regarding the points X0 and Y0 as rotation centers. Furthermore, line segments X1-X2 and Y1-Y2 denote respective tangents to the loop portion at the points X0 and Y0. The twist (twisting operation) means that the loop portion is rotated about the rotation axis Z so as to cause a rotation angle of the line segment X1-X2 to become different from a rotation angle of the line segment Y1-Y2 relative to the rotation axis Z.

## BRIEF EXPLANATION OF DRAWINGS

[FIG. 1] A schematic view in a case of deforming a loop portion into an oval shape by applying a one-dimensionally expanding and contracting operation.
[FIG. 2] A schematic view of a means according to the present invention.
[FIG. 3] A schematic view for explaining a "twist" according to the present invention.
[FIG. 4] A schematic view showing a structure of an optical loss device according to the present invention.
[FIG. 5] A schematic view showing a relation between a bending loss spectrum and an operating wavelength, according to the present invention.
[FIG. 6] A schematic view showing a loop shape when deformed by the twist according to the present invention.
[FIG. 7] A schematic view showing one of means for monitoring an optical attenuation rate.
[FIG. 8] A schematic view showing a structure of an optical loss device in a first embodiment.
[FIG. 9] A schematic view showing a measurement of loss spectrum by use of an optical spectrum analyzer.
[FIG. 10] A graph showing the loss spectra of optical loss device when a rotation angle is equal to 0 degree and 180 degrees, in the first embodiment.
[FIG. 11] A schematic view showing a measurement of insertion loss by use of a power meter.
[FIG. 12] A schematic view showing a shape of the loop portion of optical fiber 1 when giving the twist to the loop portion, in the first embodiment.
[FIG. 13] A graph showing a relation between the insertion loss of optical fiber 1 and the rotation angle of optical loss device according to the first embodiment.
[FIG. 14] A schematic view showing a measurement system which was used for a reflection measurement.
[FIG. 15] A schematic view showing a structure of an optical loss device in a second embodiment.
[FIG. 16] A schematic view showing a structure of an optical loss device in a third embodiment.
[FIG. 17] A schematic view showing a structure of the third embodiment.

## DETAILED DESCRIPTION

According to the present invention, there can be provided an optical loss device which has a low insertion loss, which generates substantially no reflection and which causes the optical fiber not to become entangled.

The present invention can provide a technique applicable not only to an optical measurement and an optical communication but also to the general field of an optical transmission using optical fiber, as an optical attenuator or optical switch.

Best mode of the present invention will be explained below. At first, parameters of the optical fiber which produce an influence on the bending loss will now be explained. Generally, the bending loss $\alpha$ of the optical fiber per unit length is expressed by the following formulas.

$$\alpha = 4.34 \times (\pi a w R)^{-1/2} \times (u/V)^2 \times \exp(((-4/3) \cdot (w^3/V^2) \cdot \Delta R/a)$$

$$u = (k^2 \cdot n1^2 - \beta^2)^{1/2} \times a$$

$$w = (\beta^2 - k^2 \cdot n2^2)^{1/2} \times a$$

$$\beta = n1 \cdot k\cos\theta$$

$$k = \lambda / 2\pi$$

$$V = ka(n1^2 - n2^2)^{1/2}$$

$$NA = (2\Delta)^{1/2} \cdot n1$$

where, "a" denotes a core diameter, V denotes a normalized waveguide frequency, n1 denotes a core refractive index, n2 denotes a cladding refractive index, $\lambda$ denotes a wavelength, R denotes a bending radius, and $\Delta$ denotes a relative refractive index difference.

That is, the bending loss of optical fiber varies in accordance with the wavelength of light, the refractive indexes of core and cladding, the core diameter, and the like. Nowadays, various optical fibers are manufactured in a range from near-ultraviolet wavelength to infrared wavelength. It is necessary to properly select a type, the bending radius and the winding number of optical fiber in order to obtain a most high-efficiency attenuation with a desired wavelength.

FIG. 4 shows the best mode for carrying out the present invention. In FIG. 4, a part of one optical fiber 1 has been wound n times (n turns) with a diameter value equal to d, and is held at two holding portions 2 and 3.

In this case, it is desirable that the value d of diameter is set at a value which can obtain a desired optical attenuation rate under the desired wavelength $\lambda$ when the optical fiber is wound 2n times (2n turns) with a diameter value equal to d/2.

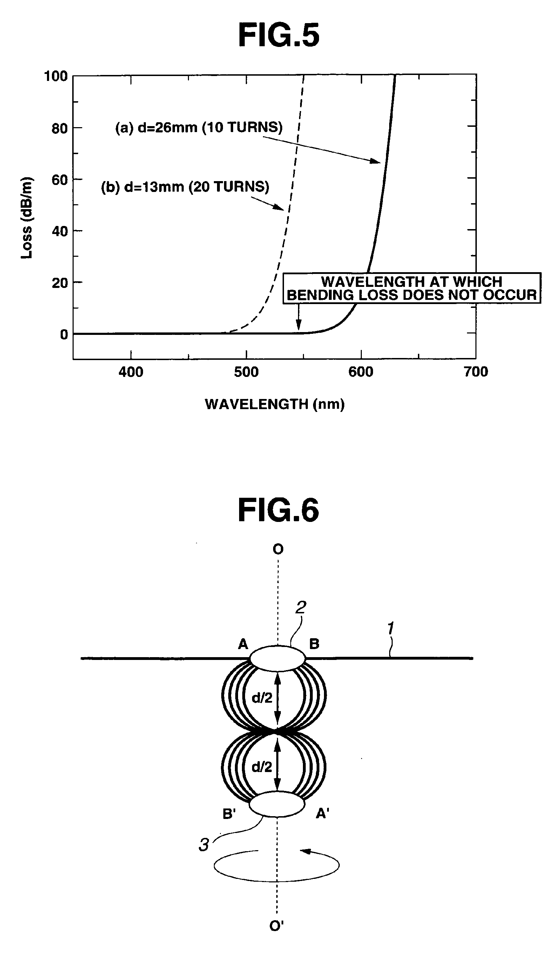

For example, the following example is given in a case that an optical loss device configured to operate under a wavelength value equal to 543 nm is made by using an optical fiber (core diameter: 2.1$\mu$m, cladding diameter: 125$\mu$m, UV coating diameter: 250$\mu$m, NA: 0.13, cutoff wavelength: 350nm). FIG. 5 shows a loss spectrum in a case that the optical fiber (core diameter: 2.1$\mu$m, cladding diameter: 125$\mu$m, UV coating diameter: 250$\mu$m, NA: 0.13, cutoff wavelength: 350nm) is bent in the condition of d = 26mm (10 turns) and in the condition of d = 13mm (20 turns). When the optical fiber is operated under a wavelength value equal to 543nm, it is desirable that the value of diameter d is set at 26mm which is a value minimum-necessary to avoid an occurrence of the bending loss under the wavelength value equal to 543nm. If the winding number of the optical fiber is lacking, or if the bending radius is too large; there is a possibility that a sufficient bending radius cannot be obtained by the twist.

In FIG. 4, in order to show a rotational direction of the holding portion provided for giving a twist to the loop-shaped optical fiber; a portion of the optical fiber which extends from the holding portion 2 to a left side is indicated by A, a portion of the optical fiber which extends from the holding portion 2 to a right side is indicated by B, a portion of the optical fiber which extends from the holding portion 3 to a left side is indicated by A', and a portion of the optical fiber which extends from the holding portion 3 to a right side is indicated by B'.

FIG. 6 shows a state where the holding portion 3 has been rotated by 180 degrees around a center axis given by an imaginary straight line O - O' while keeping fixing or locking the holding portion 2. This imaginary straight line O - O' passes through the holding portion 2 and the holding portion 3 as shown in FIG. 6. By this rotation of the holding portion 3, 2n times loops each having a diameter value equal to d/2 are formed. At this time, the optical fiber wound 2n times to have the diameter equal to d/2 achieves the desired optical attenuation rate under the desired wavelength $\lambda$.

Although the straight line O - O' of rotation axis passes through the holding portions in FIG. 6, the rotation axis has only to exist in a plane U including the loop portion of optical fiber. That is, it is not necessary that the straight line O - O' passes through the holding portions.

In the case that the one-dimensionally expanding-and-contracting operation is applied to the loop portion of optical fiber so that the loop portion is deformed in the shape of oval loop as shown in FIG. 1, the loop portion includes a portion which causes its bending radius to become smaller and also includes a portion which causes its bending radius to become larger. That is, the bending loss is reduced in the portion which causes its bending radius to become larger, resulting in inefficiency. On the other hand, in the case that the loop portion of optical fiber is twisted by the method according to the present invention as shown in FIG. 2, the bending radius becomes smaller in all areas of the loop portion of optical finer. Therefore, the bending loss can be effectively generated.

Since the optical loss device according to the present invention is constituted substantially only by the optical fiber, the reflection is not generated at all. Moreover, the optical loss device according to the present invention has no space-coupling portion, and hence can achieve a low loss.

Moreover, a desired optical attenuation rate can be obtained by controlling a rotation angle of the holding portion 3 shown in FIG. 6. Moreover, since the optical loss device according to the present invention serves to be reversible, the optical loss device according to the present invention also functions as a variable optical loss device.

In a case that a greater attenuation rate is necessary, the optical loss device according to the present invention can be used also by increasing the winding number of optical fiber or by connecting a plurality of optical loss devices according to the present invention with one another in series.

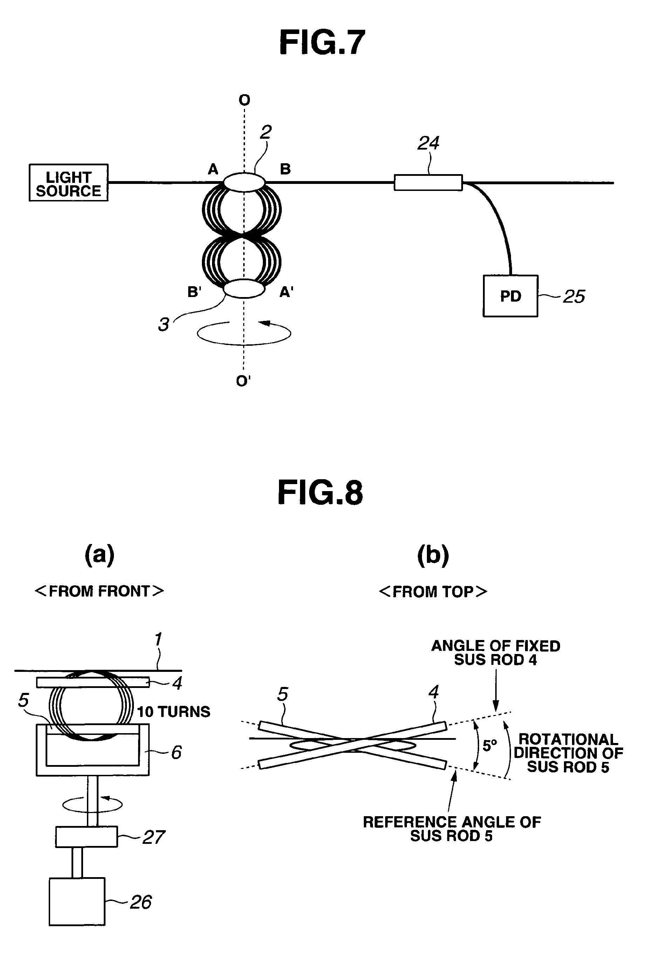

FIG. 7 shows an example of a means of determining an attenuation amount (degree) of the optical device according to the present invention. As shown in FIG. 7, a light emitted from a light source passes though the optical loss device according to the present invention, and then is made to branch off by a TAP coupler 24. Thereby, a part of the light which has passed through the optical loss device is received by a photodiode 25 so that an intensity of the light is detected. By detecting the light intensities by use of this photodiode 25 before and after the optical loss device is twisted, the attenuation amount of light intensity from the light source can be checked.

Embodiments according to the present invention will now be explained below.

**First Embodiment**

FIG. 8 shows an embodiment of the optical loss device according to the present invention. In this embodiment, the optical fiber 1 (core diameter: 2.1$\mu$m, cladding diameter: 125$\mu$m, UV coating diameter: 250$\mu$m, NA: 0.13, cutoff wavelength: 350nm) is wound 10 turns in a circular-loop shape in the condition of $\phi$ 26mm. Two SUS rods 4 and 5 ($\phi$ 3mm) are inserted through this loop. The SUS rod 4 is fastened, and the SUS rod 5 is held by a rotating mechanism 6. The rotating mechanism 6 is attached to a reduction gear 27 (speed reduction ratio: 0.25) connected with a rotation shaft of a rotary solenoid 26 (GDAX050 made by Emessem Solenoid Company). The SUS rod 5 can be rotated to a predetermined rotational angle by driving the rotary solenoid 26.

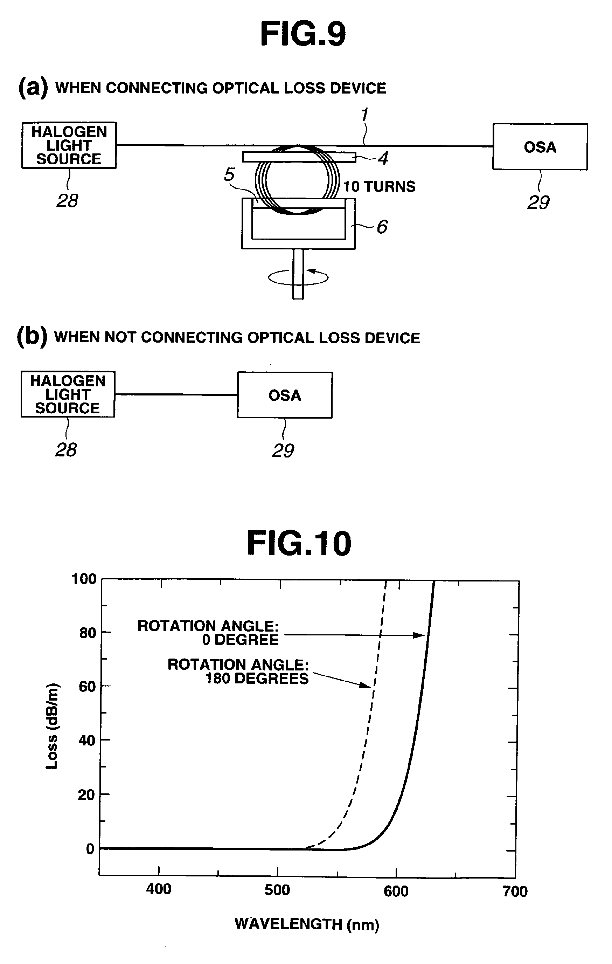

As shown in FIG. 8(b), the SUS rod 5 is placed so as to deviate by 5° relative to the SUS rod 4 in order to obtain a state where the loop portion of optical fiber 1 has not yet been twisted. The angle of SUS rod 5 relative to the SUS rod 4 in such a placement is defined as a reference angle. Loss spectra of the optical fiber 1 were measured by using a measurement system shown by FIG. 9, when the SUS rod 5 had been rotated by 0 degree (i.e., at the reference angle) and when the SUS rod 5 had been rotated by 180 degrees.

The measurement system in FIG. 9 includes a halogen light source and an optical spectrum analyzer (AQ6315A made by Ando Electric Co., Ltd.). At first, the halogen light source is turned on, and a light spectrum emitted from the optical loss device is measured, as shown in FIG. 9(a). Next, the optical loss device is removed from the measurement system, and then a light spectrum is measured, as shown in FIG. 9(b). By calculating a difference between these light-spectrum data, the optical loss spectrum was measured.

FIG. 10 shows the optical loss spectra when the SUS rod 5 has been rotated by 0 degree and by 180 degrees. As shown in FIG. 10, the loss within a range between 550nm and 600nm greatly varies in accordance with the rotation of SUS rod 5 from 0 degree to 180 degrees. Hence, especially in this wavelength range, a remarkable variation of the optical attenuation rate can be obtained.

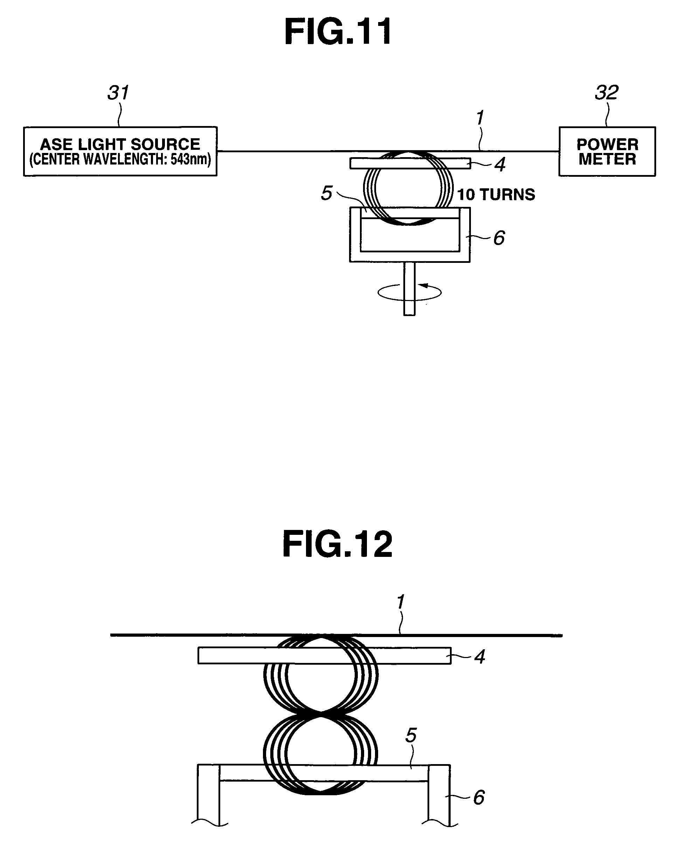

The insertion loss of optical fiber 1 was measured by using an ASE light source 31 (CFA-43LU made by Central Glass Co., Ltd.) of wavelength 543nm and by using a power meter 32 (MA9411A made by Anritsu Corporation) when the SUS rod 5 was positioned at the reference angle as shown in FIG. 11. As a result, a measured value of this insertion loss was equal to 0.08dB. Moreover, values of the insertion loss of optical fiber 1 were measured in the similar manner as the above, when the SUS rod 5 had been rotated and thereby was positioned at 0 degree, 30 degrees, 60 degrees, 90 degrees, 120 degrees, 150 degrees and 180 degrees relative to the reference angle.

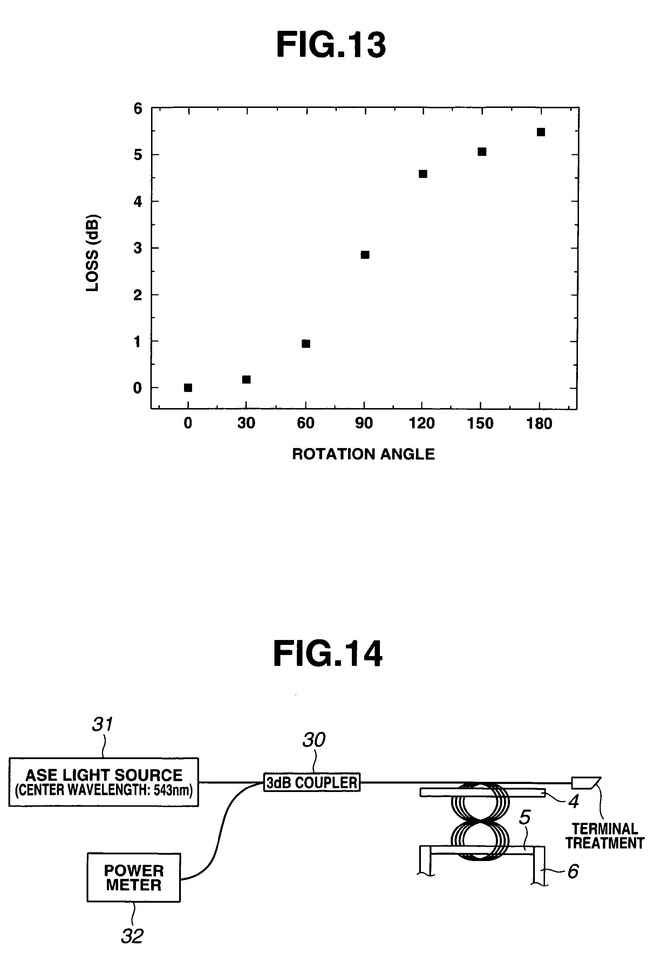

FIG. 12 shows a state of optical fiber when the optical fiber has been rotated up to 180 degrees. FIG. 13 shows a relation between the rotation angle of SUS rod 5 and the insertion loss of the twisted optical fiber 1. As shown in FIG. 13, the insertion loss increases most steeply in the vicinity of 90 degrees in rotation angle. Then, the insertion loss increases moderately when the rotation angle becomes larger than or equal to 120 degrees. The insertion loss at a rotation angle of 180 degrees was equal to 5.40dB.

Moreover, under a condition where the winding number of optical fiber had been set at one turn, and the SUS rod 5 had been rotated by 180 degrees; the insertion loss of optical fiber 1 was measured in the similar as above and thereby a measurement result of insertion loss was equal to 0.52dB. Therefore, it has been found that a value approximately equal to 0.5dB can be obtained as an optical attenuation rate per one turn of winding, under the condition where the SUS rod 5 is positioned at the rotation angle of 180 degrees relative to the reference angle. The reflection caused by the twisted optical fiber at this time was measured by using a measurement system shown by FIG. 14.

The measurement system in FIG. 14 includes the ASE light source 31 (CFA-43LU made by Central Glass Co., Ltd.) of 543nm band, a 3dB-coupler 30 (core diameter: 2.1$\mu$m, cladding diameter: 125$\mu$m, UV coating diameter: 250$\mu$m, NA: 0.13, cutoff wavelength: 350nm, transmission excess loss: 0.2dB) and the power meter 32 (MA9411A made by Anritsu Corporation). An end of the 3dB-coupler 30 is connected by melting with the optical loss device according to the present invention. Further, a terminal treatment (8° oblique polishing) is given to an end of this optical loss device in order not to cause reflections. A reflection of the light emitted from the ASE light source 31 of 543nm band is detected by the power meter 32. Thus, the light reflection can be measured.

In the case that the twist is applied to the loop portion of optical fiber 1 as shown in FIG. 12, the reflection measured by using the measurement system shown in FIG. 14 was equal to -50dB. Moreover, in the case that the termination treatment (8° oblique polishing) is given to the end of the 3dB-coupler 30 without connecting with the optical loss device according to the present invention, the reflection is attenuated by 50dB relative to outgoing power of the ASE light source, i.e., a minimum limit of detection of reflected light in the measuring method shown by FIG. 14 is equal to -50dB. That is, the reflection of the optical loss device according to the present invention is lower than or equal to the minimum limit of detection.

Moreover, when the SUS rod 5 had been returned to the reference angle by rotating the SUS rod 5 by 180 degrees in the reverse direction, a measured insertion loss was equal to 0.08dB. Moreover, by adjusting the rotation angle, an arbitrary value of attenuation rate could be obtained between 0.08dB and 5.2dB. That is, a variable attenuator can be constructed according to the present invention.

Since an optical attenuator using the optical loss device according to the present invention does not pass through the space, a Fresnel reflection is not caused which tends to occur between glass and air having a great difference in refractive index therebetween.

**Second Embodiment**

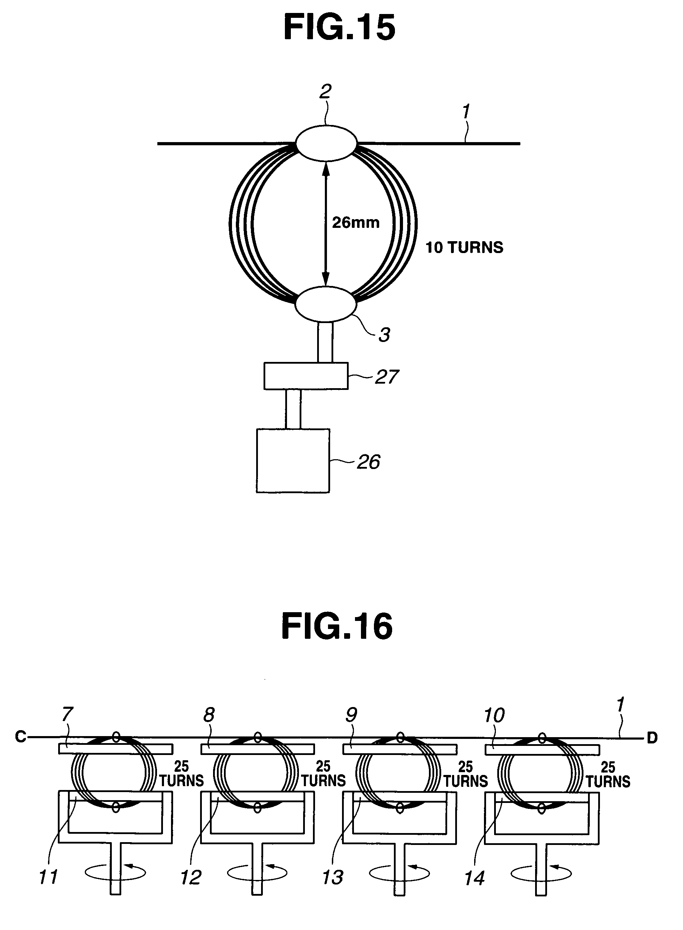

FIG. 15 shows an embodiment of optical loss device according to the present invention. In this embodiment, the optical fiber 1 (core diameter: 2.1$\mu$m, cladding diameter: 125$\mu$m, UV coating diameter: 250$\mu$m, NA: 0.13, cutoff wavelength: 350nm) is wound 10 turns in a circular-loop shape in the condition of $\phi$ 26mm. The holding portion 3 is formed by fixing the loop portion of optical fiber 1, by means of UV curable resin, to the reduction gear 27 (speed reduction ratio: 0.25) connected with the rotation shaft of rotary solenoid 26 (GDAX050 made by Emessem Solenoid Company).

Moreover, the holding portion 2 is formed by fixing (fastening) the loop portion at a side opposite to the holding portion 3 by means of UV curable resin. Therefore, the holding portion 3 of the loop portion is rotated by a drive of the rotary solenoid 26 so that the loop portion is twisted.

The insertion loss of optical fiber 1 was measured by using the measurement system shown by FIG. 11 in the similar manner as the first embodiment, when the holding portion 3 had been rotated by 180 degrees. As a result, the insertion loss was found to be equal to 5.35dB under a wavelength condition of 543nm. Accordingly, it could be confirmed that the second embodiment functions as the optical loss device in the same manner as the first embodiment.

**Third Embodiment**

FIG. 16 shows an embodiment of optical loss device according to the present invention. The optical loss device in this embodiment is constructed by connecting in series four optical loss devices each of which is same as the structure of optical loss device in the first embodiment except that the winding number of optical fiber 1 is set at 25 turns. Under a state where four SUS rods 7, 8, 9 and 10 had been fixed, SUS rods 11, 12, 13 and 14 were rotated by 180 degrees from the reference angle. At this time, the insertion loss of optical fiber 1 was measured by using the measurement system shown by FIG. 11 in the similar manner as the first embodiment. As a result, the insertion loss was equal to 50dB under the wavelength condition of 543nm. That is, in this embodiment, an optical loss device having an attenuation rate of 50dB between points C and D could be achieved. Moreover, the reflection of the optical loss device shown in FIG. 16 was measured by using the measurement system shown by FIG. 14 in the similar manner as the first embodiment. As a result, the reflection was lower than or equal to the detection minimum limit of -50dB.

**Fourth Embodiment**

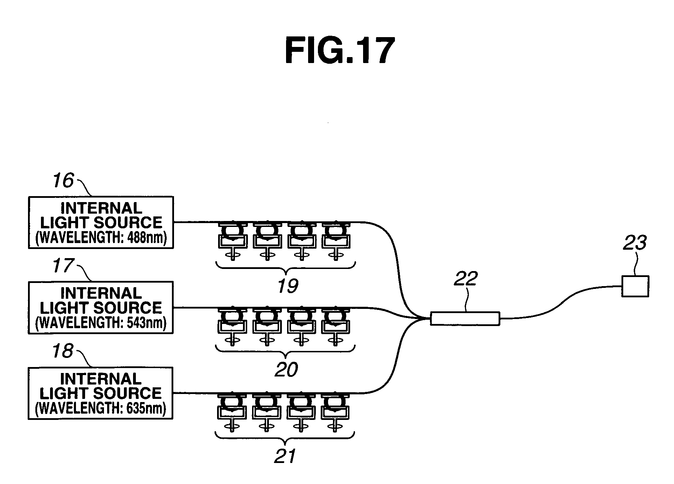

FIG. 17 shows an embodiment of optical loss device according to the present invention. In this embodiment, ends of three internal light sources 16 (488nm-wavelength light source: Tm-Yb codoped up-conversion fiber light source), 17 (543nm-wavelength light source: CFA-43LU made by Central Glass Co., Ltd.) and 18 (635nm-wavelength light source: FOSS-01-3S-4/125-635-S-1 made by OZ optics) which have wavelengths different from one another are connected respectively with optical loss devices 19, 20 and 21 each of which has the similar structure as that of the third embodiment. Further, another ends of the optical loss devices 19, 20 and 21 are connected with a fiber-fused-taper-type WDM 22 and are collected or integrated into one optical fiber so that light is outputted from an output connector 23.

In a case that all of the internal light sources 16, 17 and 18 had been turned on and rotation angles of all the optical loss devices 19, 20 and 21 according to the present invention had been set at 0 degree (i.e., reference angle), lights of three wavelengths (488nm, 543nm, 635nm) were outputted from the output connector 23.

Moreover, in a case that the respective rotation angles of optical loss devices 20 and 21 had been set at 180 degrees, the lights of wavelengths 543nm and 635nm were not outputted from the output connector. Thus, it was confirmed that the optical loss device of this embodiment can also function as an optical switch for switching between ON and OFF of a specific wavelength(s).

By virtue of this structure according to the present invention; only a specific wavelength within the lights outputted from the internal light sources can be made to pass (or be cut off). Moreover, since the internal light sources are connected to an output port via no space except the optical fibers, the optical switch which causes no reflection could be constructed by this structure according to the present invention.

**Explanation of reference signs**

| | |
|---|---|
| 1: | Optical fiber |
| 2: | Holding portion |
| 3: | Holding portion |
| 4, 7, 8, 9, 10: | Fixed SUS rod |
| 5: | SUS rod held by rotating mechanism 6 |
| 6: | Rotating mechanism |

| | |
|---|---|
| 11, 12, 13, 14: | SUS rod held by rotating mechanism |
| 16: | Internal light source (wavelength 488nm) |
| 17: | Internal light source (wavelength 543nm) |
| 18: | Internal light source (wavelength 635nm) |
| 19, 20, 21: | Optical loss device according to the present invention |
| 22: | Fiber-type fused taper device |
| 23: | Output connector |
| 24: | TAP coupler |
| 25: | Photodiode |
| 26: | Rotary solenoid |
| 27: | Reduction gear |
| 28: | Halogen light source |
| 29: | Optical spectrum analyzer |
| 30: | 3dB coupler |
| 31: | 543nm ASE light source |
| 32: | Power meter |
| A: | Left end of holding portion 2 |
| B: | Right end of holding portion 2 |
| A': | Left end of holding portion 3 |
| B': | Right end of holding portion 3 |
| C: | Input terminal of optical loss device |
| D: | Output terminal of optical loss device |
| Z: | Rotation axis |
| O-O': | Rotation axis of holding portion 3 |
| U: | Imaginary plane to which loop portion of optical fiber belongs |
| XO, YO: | Arbitrary point of loop-shaped optical fiber |
| X1-X2: | Line segment of tangent at point X0 located on circle |
| Y1-Y2: | Line segment of tangent at point Y0 located on circle |
| d: | Loop diameter before twisting |

d/2: Loop diameter after twisting

**Claims**

1. An optical loss device including an optical fiber,
   **characterized in that**
   the optical loss device comprises a loop portion formed by winding the optical fiber in a loop shape at least one turn, and two rotation centers which are located in a plane defined by the loop portion and which face each other, the two rotation centers forming a rotation axis located in the plane, and
   a light of wavelength band is attenuated, by twisting the loop portion around the rotation axis to vary a shape of the loop portion.

2. The optical loss device including the optical fiber, according to Claim 1, **characterized in that**
   the two rotation centers of the loop portion are respectively used as two holding portions, and
   the loop portion is twisted by rotating the two holding portions around the rotation axis.

3. The optical loss device including the optical fiber, according to Claim 1, **characterized in that**
   the optical loss device further comprises two rods through a loop of the loop portion, and
   the loop portion is twisted by rotating one of the two rods around the rotation axis.

# FIG.1

**(a)**

LOOP SHAPE OF
OPTICAL FIBER BEFORE
ONE-DIMENSIONALLY
EXPANDING AND
CONTRACTING OPERATION

**(b)**

LOOP SHAPE OF
OPTICAL FIBER AT THE TIME
OF ONE-DIMENSIONALLY
EXPANDING AND
CONTRACTING OPERATION

d: LOOP DIAMETER OF OPTICAL FIBER BEFORE EXPANDING
AND CONTRACTING OPERATION

$\Delta dx$, $\Delta dy$: VARIATION AMOUNT IN LOOP DIAMETER OF OPTICAL FIBER AT
THE TIME OF EXPANDING AND CONTRACTING OPERATION

# FIG.2

**(a)**

LOOP SHAPE OF
OPTICAL FIBER
BEFORE TWISTING

**(b)**

LOOP SHAPE OF
OPTICAL FIBER
WHEN TWISTING

# FIG.3

Z

X0

X1 — X2

1

Y1 — Y2

Y0

ROTATIONAL
DIRECTION

PLANE: U

# FIG.4

O

2

1

A B

d

n TURNS

A' B'

3

O'

# FIG.5

Loss (dB/m) vs WAVELENGTH (nm)

(a) d=26mm (10 TURNS)

(b) d=13mm (20 TURNS)

WAVELENGTH AT WHICH BENDING LOSS DOES NOT OCCUR

# FIG.6

# FIG.7

# FIG.8

### (a)

<FROM FRONT>

### (b)

<FROM TOP>

# FIG.9

## (a) WHEN CONNECTING OPTICAL LOSS DEVICE

HALOGEN LIGHT SOURCE

OSA

28

1

4

5

10 TURNS

6

29

## (b) WHEN NOT CONNECTING OPTICAL LOSS DEVICE

HALOGEN LIGHT SOURCE

OSA

28

29

# FIG.10

ROTATION ANGLE: 0 DEGREE

ROTATION ANGLE: 180 DEGREES

Loss (dB/m)

100

80

60

40

20

0

400    500    600    700

WAVELENGTH (nm)

# FIG.11

31

**ASE LIGHT SOURCE**
(CENTER WAVELENGTH: 543nm)

1

4

5

**10 TURNS**

6

32

**POWER METER**

# FIG.12

1

4

5

6

# FIG.13

# FIG.14

# FIG.15

2
1
26mm
10 TURNS
3
27
26

# FIG.16

7
8
9
10
1
C
D
25 TURNS
25 TURNS
25 TURNS
25 TURNS
11
12
13
14

# FIG.17

<div align="center">

**INTERNATIONAL SEARCH REPORT**

</div>

| | International application No. |
|---|---|
| | PCT/JP2008/061984 |

**A. CLASSIFICATION OF SUBJECT MATTER**
*G02B26/02(2006.01)i*

According to International Patent Classification (IPC) or to both national classification and IPC

**B. FIELDS SEARCHED**

Minimum documentation searched (classification system followed by classification symbols)
G02B26/02, G02B6/00

Documentation searched other than minimum documentation to the extent that such documents are included in the fields searched

| Jitsuyo Shinan Koho | 1922-1996 | Jitsuyo Shinan Toroku Koho | 1996-2008 |
|---|---|---|---|
| Kokai Jitsuyo Shinan Koho | 1971-2008 | Toroku Jitsuyo Shinan Koho | 1994-2008 |

Electronic data base consulted during the international search (name of data base and, where practicable, search terms used)
JSTPlus(JDreamII), JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| A | JP 2005-077973 A (Hitachi Metals, Ltd.), 24 March, 2005 (24.03.05), Par. Nos. [0032] to [0039]; Figs. 1 to 7 & US 2005/0047745 A1 & EP 001513003 A1 | 1-3 |
| A | JP 2001-228337 A (Hitachi, Ltd.), 24 August, 2001 (24.08.01), Par. Nos. [0012] to [0040]; Figs. 1 to 10 (Family: none) | 1-3 |
| A | JP 2000-075222 A (Tatsuta Electric Wire & Cable Co., Ltd.), 14 March, 2000 (14.03.00), Par. Nos. [0012] to [0014], [0028] to [0033]; Figs. 1, 5, 6 (Family: none) | 1-3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 July, 2008 (24.07.08) | 05 August, 2008 (05.08.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/061984 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 04-026802 A  (Fujitsu Ltd.),<br>30 January, 1992 (30.01.92),<br>Page 2, lower right column, line 10 to page 4,<br>upper left column, line 10; Figs. 1, 3<br>(Family: none) | 1-3 |

Form PCT/ISA/210 (continuation of second sheet) (April 2007)

**REFERENCES CITED IN THE DESCRIPTION**

**Patent documents cited in the description**

- JP 2933919 B
- JP 2000314861 A
- JP 9159940 A
- JP 2006078837 A
- JP 62060902 A
- JP 7159705 A
- JP 2005077973 A